## Europäisches Patentamt
## European Patent Office
## Office européen des brevets

(19)

(11) Veröffentlichungsnummer: **0 059 845**
**A2**

(12) # EUROPÄISCHE PATENTANMELDUNG

(21) Anmeldenummer: 82100906.5

(22) Anmeldetag: 09.02.82

(51) Int. Cl.³: **B 60 M 1/18**

(30) Priorität: 06.03.81 DE 3108453

(43) Veröffentlichungstag der Anmeldung:
15.09.82 Patentblatt 82/37

(84) Benannte Vertragsstaaten:
CH DE FR GB IT LI

(71) Anmelder: Karl Pfisterer Elektrotechnische
Spezialartikel GmbH & Co. KG
Augsburger Strasse 375
D-7000 Stuttgart 60(DE)

(72) Erfinder: Höckele, Max
Fichtenstrasse 3
D-7061 Berglen(DE)

(72) Erfinder: Dalferth, Günter
Bächlenweg 26
D-7000 Stuttgart 61(DE)

(74) Vertreter: Patentanwälte Dr. Wolff, H. Bartels
Dipl.-Chem. Dr. Brandes Dr.-Ing. Held, Dipl.-Phys. Wolff
Lange Strasse 51
D-7000 Stuttgart 1(DE)

(54) Isolierstab für einen Streckentrenner oder Phasentrenner.

(57) Ein Isolatorstab für einen der mechanisch festen und elektrisch isolierenden Verbindung zwischen zwei Fahrdrahtabschnitten (9) einer Oberleitung dienenden Streckentrenner oder Phasentrenner, der auf einem Teil seiner Länge eine Gleitbahn für die den Fahrdraht kontaktierenden Stromabnehmer bildet, hat einen Kern (1') aus einem glasfaserverstärkten Kunststoff sowie eine den Kern zumindest auf einem Teil seiner Länge umgebende Hülle (3') aus einem elektrisch isolierenden Kunststoff. In dem die Gleitbahn für die Stromabnehmer bildenden Abschnitt ist der Kern (1') zumindest auf seiner den Stromabnehmern zugekehrten Seite mit einem metallischen Mantel (5') versehen.

Fig.4.

0059845

13. Jan. 1982
Reg.-Nr.126 326
Ref.: 3320rrp

KARL PFISTERER ELEKTROTECHNISCHE SPEZIALARTIKEL GMBH & CO. KG,
Augsburger Strasse 375, D-7000 Stuttgart 60 (DE)

---

Isolatorstab für einen Streckentrenner oder Phasentrenner

---

Die Erfindung betrifft einen Isolatorstab für einen der
mechanisch festen und elektrisch isolierenden Verbindung
zwischen zwei Fahrdrahtabschnitten einer Oberleitung dienenden Streckentrenner oder Phasentrenner, der auf einem
Teil seiner Länge eine Gleitbahn für die den Fahrdraht kontaktierenden Stromabnehmer bildet und einen Kern aus einem
glasfaserverstärkten Kunststoff sowie eine den Kern zumindest auf einem Teil seiner Länge umgebende Hülle aus einem
elektrisch isolierenden Kunststoff aufweist.

Bei den bekannten Isolatorstäben dieser Art erstreckt sich
die Hülle über die gesamte Länge des Kerns mit Ausnahme von
dessen der Verbindung mit anderen Teilen des Streckentrenners oder Phasentrenners dienenden Endabschnitten. Auf einem
Teil ihrer Länge bildet deshalb die Hülle die Gleitbahn für die Stromabnehmer. Dies hat einen Verschleiß der Hülle zur Folge, was, allerdings in großen Zeitabschnitten, einen Austausch des Isolatorstabes erforderlich macht.

Der Erfindung liegt die Aufgabe zugrunde, einen Isolatorstab der eingangs genannten Art zu verbessern und insbesondere seine Lebensdauer in dem von den Stromabnehmern überfahrenen Abschnitt zu erhöhen.

Diese Aufgabe löst ein Isolatorstab, der die Merkmale des Anspruches 1 aufweist. Der metallische Mantel, auf dem die Stromabnehmer gleiten, führt zu einem sehr geringen Verschleiß, wodurch sich ohne Schwierigkeiten eine erhöhte Lebensdauer erreichen läßt. Infolge des geringen Verschleisses des metallischen Mantels kann dessen Wandstärke relativ gering gewählt werden, was im Hinblick auf das Gewicht des Isolatorstabes vorteilhaft ist. Der metallische Mantel ist auch insofern von besonderem Vorteil, als er es ermöglicht, während des Überfahrens des Trenners vom Fahrstrom gesteuerte Schaltbefehle auszulösen.

In vielen Fällen wird es am vorteilhaftesten sein, für den metallischen Mantel Kupfer oder eine Kupferlegierung, also ein dem Material des Fahrdrahtes entsprechendes Material, vorzusehen. Es kommen aber auch andere verschleißfeste Metalle, beispielsweise rostfreie Metalle, insbesondere rostfreier Stahl, in Frage.

Die Ausbildung des metallischen Mantels ist in verschiedener Weise möglich. Bei der Wahl der Form des metallischen Mantels werden zweckmäßigerweise auch die Eigenschaften der Hülle sowie einer vorzugsweise vorhandenen, an dem Kern in dem mit dem metallischen Mantel versehenen Abschnitt anliegenden Umhüllung berücksichtigt, welche bei bevorzugten Ausführungsformen aus einem dauerelastischen Harz oder aus Silikonkautschuk besteht. Es muß nämlich verhindert werden, daß sich bei einer Schrumpfung der Umhüllung während eines Abkühlungsvorganges, wie er im Anschluß an das Aufbringen der Umhüllung auf den Kern auftritt, die Umhüllung sich vom Kern abhebt.

Ist der metallische Mantel ein Stab mit einem den Kern teilweise umfassenden Querschnittsprofil, dann kann eine Schrumpfung nicht dazu führen, daß sich die Umhüllung vom Kern abhebt, selbst wenn die Umhüllung aus Silikonkautschuk besteht. Falls erforderlich, kann mit Klammern oder Bügeln, welche von oben her die Umhüllung übergreifen, der metallische Mantel festgelegt werden. Eine andere vorteilhafte Ausführungsform des metallischen Mantels ist ein den Kern vorzugsweise konzentrisch umfassendes Rohr. Vor allem dann, wenn die Umhüllung aus einem dauerelastischen Harz besteht, ist eine Spaltbildung infolge einer Schrumpfung in der Regel nicht zu befürchten, auch wenn das Rohr eine vollständig geschlossene Zylinderfläche bildet. Muß jedoch damit gerechnet werden, daß sich die Umhüllung nach einer Schrumpfung vom Kern abheben würde, wie dies bei einer Umhüllung aus Silikonkautschuk der Fall sein könnte, wenn das Rohr eine vollständig geschlossene Mantelfläche hätte, dann kann man ein Rohr vorsehen, das in seiner oberen Hälfte in Längsrichtung zumindest auf einem Teil seiner Länge geschlitzt ist. Statt eines derartigen Längsschlitzes kann das Rohr aber auch in seiner oberen Hälfte wenigstens zwei in Rohrlängsrichtung verlaufende Reihen von Durchbrüchen aufweisen, wobei vorzugsweise die Durchbrüche der einen Reihe jeweils neben einem Zwischenraum zwischen zwei aufeinanderfolgenden Durchbrüchen der anderen Reihe angeordnet sind. Dieselbe Wirkung kann man aber auch beispielsweise dadurch erzielen, daß man ein Rohr vorsieht, das im Wechsel Abschnitte, in denen es den Kern vollständig umfaßt, und Abschnitte, in denen die Umfassung unvollständig ist, aufweist. In allen Fällen wird der Umhüllung bei der Abkühlung diejenige Schrumpfungsmöglichkeit geboten, die sie benötigt, um in Anlage am Kern bleiben zu können.

Um in einfacher Weise den metallischen Mantel gegenüber dem Kern positionieren zu können und dann, wenn der metallische Mantel ein geschlossenes Rohr ist, das Eindringen von Feuchtigkeit in dieses Rohr zu verhindern, übergreift bei einer bevorzugten Ausführungsform der metallische Mantel mit rohrförmigen Endabschnitten an beiden Enden die sich hier anschließenden beiden Hüllen des Kernes. Besonders vorteilhaft ist es, wenn diese Hüllen in den vom Metallrohr übergriffenen Endabschnitten einen verkleinerten Außendurchmesser haben. Der Außendurchmesser des Isolatorstabes kann dann im Bereich des metallischen Mantels etwa die gleiche Größe wie im Bereich der aus Kunststoff bestehenden Hüllen haben. Außerdem wird hierdurch die Montage des metallischen Mantels vereinfacht.

Da die aus Kunststoff bestehenden Hüllen und das Metallrohr unterschiedliche Wärmedehnungen haben können, ist es vorteilhaft, eine Dichtpaste zwischen den einander zugekehrten Flächen des Metallrohres und der Hüllen vorzusehen, welche zuverlässig das Eindringen von Feuchtigkeit verhindern. Eine derartige Dichtpaste erübrigt sich, falls die Umhüllung des Kerns in dem mit dem metallischen Mantel versehenen Abschnitt sich einstückig an die Hülle oder Hüllen anschließt.

Da die Längsisolationsfähigkeit des Isolatorstabes in denjenigen Abschnitten erreicht werden muß, in denen der Kern von der aus isolierendem Kunststoff bestehenden Hülle umgeben ist, ist es zweckmäßig, hier nicht nur ein Material mit hoher Isolationsfähigkeit für die Hülle zu verwenden, wie dies Polytetrafluoräthylen oder Silikonkautschuk darstellt, sondern außerdem die Hülle mit nach außen offenen Ringnuten zu versehen.

Im folgenden ist die Erfindung/von in der Zeichnung dargestellten Ausführungsbeispielen im einzelnen erläutert. Es zeigen:

    Fig. 1   eine Ansicht des ersten Ausführungsbeispiels,

    Fig. 2   einen unvollständig dargestellten Längsschnitt des ersten Ausführungsbeispiels,

    Fig. 3a und 3b eine verkleinert dargestellte Draufsicht auf einen Streckentrenner mit zwei Isolatorstäben gemäß den Ausführungsbeispielen,

Fig. 4 einen unvollständig dargestellten Längsschnitt des zweiten Ausführungsbeispiels,

Fig. 5 eine perspektivisch dargestellte Ansicht des metallischen Mantels eines dritten Ausführungsbeispiels,

Fig. 6 einen Querschnitt durch das dritte Ausführungsbeispiel im Bereich des metallischen Mantels,

Fig. 7 einen Querschnitt eines vierten Ausführungsbeispiels im Bereich des metallischen Mantels,

Fig. 8 eine unvollständig dargestellte Draufsicht auf ein fünftes Ausführungsbeispiel,

Fig. 9 eine unvollständig dargestellte Draufsicht auf ein sechstes Ausführungsbeispiel.

Ein Isolatorstab für einen Streckentrenner oder Phasentrenner weist einen Kern 1 in Form eines zylindrischen Stabes auf, der aus glasfaserverstärktem Kunststoff besteht. Die beiden Endabschnitte des Kernes 1 sind in die zentrale Längsbohrung je eines aus Kupfer oder einer Kupferlegierung bestehenden Verbindungsrohres 2 eingeführt und mit diesem Verbindungsrohr mechanisch fest verbunden. Zur Herstellung dieser Verbindung wird der Durchmesser der Verbindungsrohre 2 in einem Ziehverfahren bleibend so weit verringert, daß das Verbindungsrohr eine ausreichend hohe Klemmkraft auf den Kern 1 ausübt.

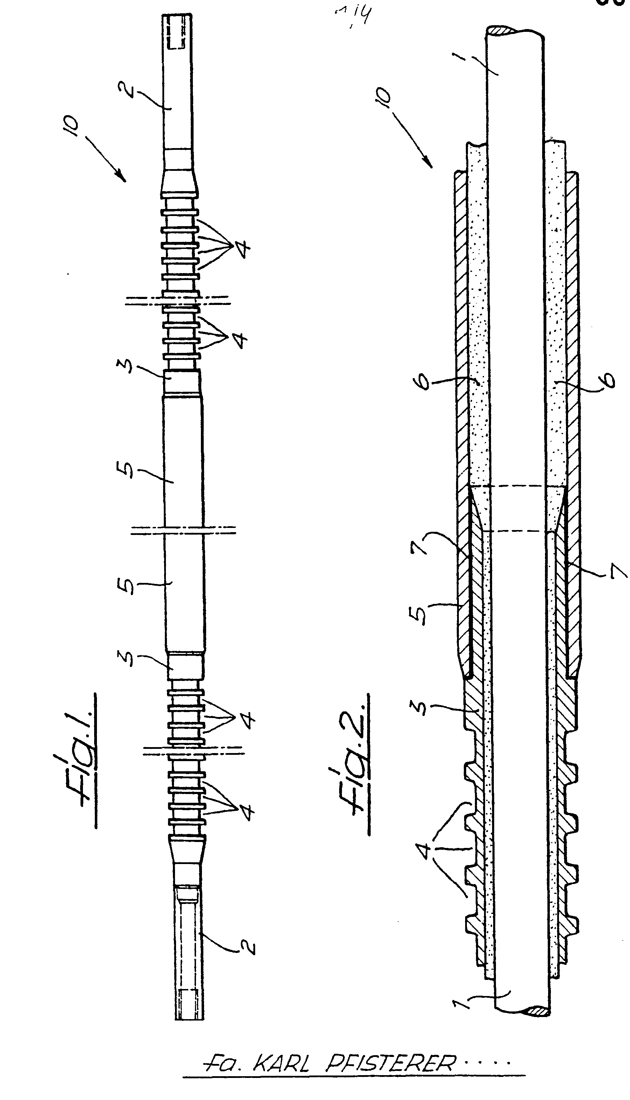

Da der Kern 1 durch eine Hülle geschützt werden muß, schließen sich an die beiden Verbindungsrohre 2 je ein aus Polytetrafluoräthylen bestehendes Rohr 3 an. Der Innendurchmesser dieser Rohre 3 ist, wie Fig. 2 zeigt, etwas größer als der Außendurchmesser des Kernes 1. Nicht dargestellte, warzenartige Abstandhalterelemente halten die beiden Rohre 3 in einer konzentrischen Lage bezüglich des Kernes 1.

Um eine möglichst hohe Längsisolationsfähigkeit zu erreichen und die Bildung von Kriechstromstrecken auch dann auszuschließen, wenn sich Feuchtigkeit am Rohr 3 niederschlägt oder sich an diesem Wassertropfen bilden, sind die Rohre 3 mit nach außen offenen Ringnuten 4 versehen, die, wie Fig. 2 zeigt, im Ausführungsbeispiel eine etwas größere Breite haben als die zwischen je zwei benachbarten Ringnuten gebildeten Stege.

An dem dem Verbindungsrohr 2 abgekehrten Ende ist bei den beiden aus Polytetrafluoräthylen bestehenden Rohren 3 der Innendurchmesser nach außen hin trichterförmig erweitert.

Außerdem ist hier auf einer Länge, die größer ist als die Länge der trichterförmigen Erweiterung, der Außendurchmesser verkleinert, wodurch eine Ringschulter am Übergang zu dem die Ringnuten aufweisenden Abschnitt vorhanden ist.

Einen verkleinerten Durchmesser weist auch der sich an das Verbindungsrohr 2 anschließende Endabschnitt des Rohres 3 auf, wie Fig. 1 zeigt. Über den dem Verbindungsrohr 2 abgekehrten Endabschnitt verringerten Durchmessers des Rohres 3 ist ein Metallrohr 5 geschoben, das sich von der Ringschulter des einen Rohres 3 bis zur Ringschulter des anderen Rohres 3 erstreckt und dessen Innendurchmesser an den Außendurchmesser der Rohre 3 in dem übergriffenen Endabschnitt angepaßt ist. Der Außendurchmesser des Metallrohrs 5 ist geringfügig größer als der Außendurchmesser der aus Polytetrafluoräthylen bestehenden Rohre 3 in dem die Ringnuten 4 aufweisenden Abschnitt. Die Wandstärke des Metallrohres 5 ist deshalb geringer als diejenige der Rohre 3. Das Material, aus dem das Metallrohr 5 besteht, ist eine Kupferlegierung, wie sie auch für Fahrdrähte verwendet wird.

Die beiden Rohre 3 zentrieren das Metallrohr 5 bezüglich des Kernes 1. Es ist jedoch möglich, das Metallrohr 5 zusätzlich mit Hilfe von Abstandhalterelementen zu zentrieren, die wie die Abstandhalterelemente im Bereich der Rohre 3 ausgebildet und beispielsweise am Kern 1 befestigt sein können. Der Raum zwischen dem Kern einerseits und den aus Polytetrafluoräthylen bestehenden Rohren 3 sowie dem Metallrohr 5 andererseits ist vollständig mit einem dauerelastischen Harz 6 gefüllt. Eine Paste 7 zwischen den einander zugekehrten Mantelflächen des Metallrohres 5 und der aus Polytetrafluoräthylen bestehenden Rohre 3 in den vom Metallrohr übergriffenen Endabschnitten stellt sicher, daß Feuchtigkeit und dergleichen auch unter ungünstigen Bedingungen und trotz einer unterschiedlichen Wärmedehnung nicht in das Innere der aus den Rohren 3 und dem Metallrohr 5 gebildeten Schutzhülle eindringen kann.

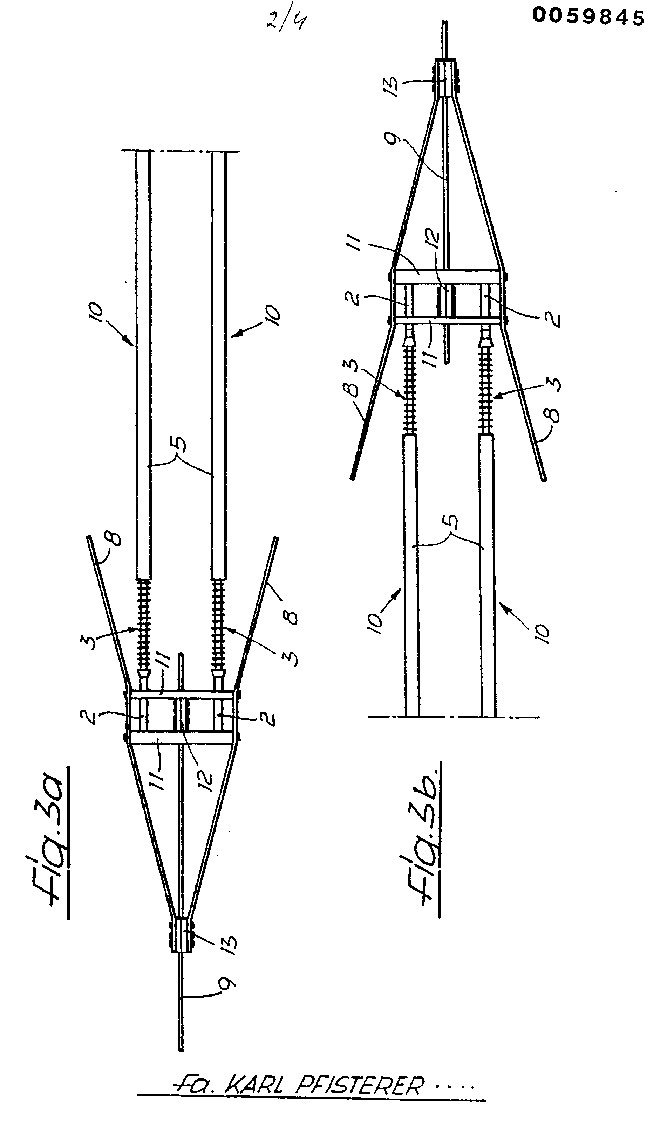

Wie Fig. 3 zeigt, liegen die Endabschnitte der Metallrohre 5 zwischen den beiden Kufen je eines Kufenpaares 8, welche den Schleifbügel eines den Trenner überfahrenden Stromabnehmers vom Fahrdraht 9 auf die Metallrohre 5 oder umgekehrt überführen. Nur in den beiden Endabschnitten, die zwischen je einem Kufenpaar 8 des Trenners liegen,wird also die Hülle des Kerns 1 durch die aus Polytetrafluoräthylen bestehenden Rohre 3 gebildet. Da der Außendurchmesser der Rohre 3 etwas kleiner ist als derjenige des Metallrohres 5, liegt die Unterseite der Rohre 3 auch dann etwas höher als die durch die Unterseite der Kufenpaare 8 gebildete Gleitbahn, wenn diese Gleitbahn in der durch die Unterseite des Metallrohres 5 der beiden gleich ausgebildeten, parallel und im Abstand nebeneinander liegenden Isolatorstäbe 10 und des Fahrdrahtes 9 definierten Ebene liegt, was zur Vermeidung von stoßartigen Belastungen der Stromabnehmer vorteilhaft ist.

Die Kufen der beiden Kufenpaare 8, welche sich etwas über das an das Metallrohr 5 angrenzende Ende des aus Polytetrafluoräthylen bestehenden Rohres 3 hinaus erstrecken, sind in ihrem Mittelabschnitt an zwei in Längsrichtung des Fahrdrahtes 9 im Abstand voneinander angeordneten Traversen 11 befestigt, mit denen auch die Verbindungsrohre 2 sowie eine erste Fahrdrahtklemme 12 zugfest verbunden sind. Von diesen Traversen 11 aus nimmt der Abstand der Kufen zu den zwischen ihnen liegenden Isolatorstäben 10 hin zu. Hingegen nimmt der Abstand gegen das andere Kufenende hin zu dem hier zwischen den Kufen liegenden Fahrdraht 9 hin ab. Eine zweite Fahrdrahtklemme 13 verbindet diese Kufenenden mit dem Fahrdraht 9.

Das in Fig. 4 dargestellte, zweite Ausführungsbeispiel weist wie das erste Ausführungsbeispiel einen Kern 1' in Form eines zylindrischen Stabes aus glasfaserverstärktem Kunststoff sowie Verbindungsrohre 2' aus Kupfer oder einer Kupferlegierung auf. Mit letzteren sind die beiden Enden des Kernes 1' mechanisch fest verbunden. Den Mittelabschnitt des Kernes 1' umgibt konzentrisch ein Metallrohr 5', das wie das Metallrohr 5 ausgebildet ist. Der hohlzylindrische Zwischenraum zwischen dem Metallrohr 5' und dem Kern 1' ist jedoch nicht mit einem dauerelastischen Harz ausgefüllt, sondern mit Silikonkautschuk 6'. Ebenfalls aus Silikonkautschuk bestehen die sich an beide Enden des Metallrohres 5' anschließenden und sich bis zum einen bzw. anderen Verbindungsrohr 2' erstreckenden Rohre 3', die an der Außenmantelfläche des Kernes 1' anliegen und wie die Rohre 3 mit Ringnuten 4' versehen sind. Da die Rohre 3' und die durch den Silikonkautschuk 6' gebildete Füllung im Gießverfahren auf den Kern 1' aufgebracht sind, sind sie im Ausführungsbeispiel einstückig ausgebildet.

Die im folgenden beschriebenen Ausführungsbeispiele unterscheiden sich von dem Ausführungsbeispiel gemäß Fig. 4 nur durch eine andere Form des metallischen Mantels in demjenigen Abschnitt des Isolatorstabes, in dem dieser die Gleitbahn für die Stromabnehmer bildet. Soweit diese Ausführungsbeispiele im einzelnen nicht beschrieben sind, wird deshalb auf die Ausführungen zu dem Ausführungsbeispiel gemäß Fig. 4 Bezug genommen.

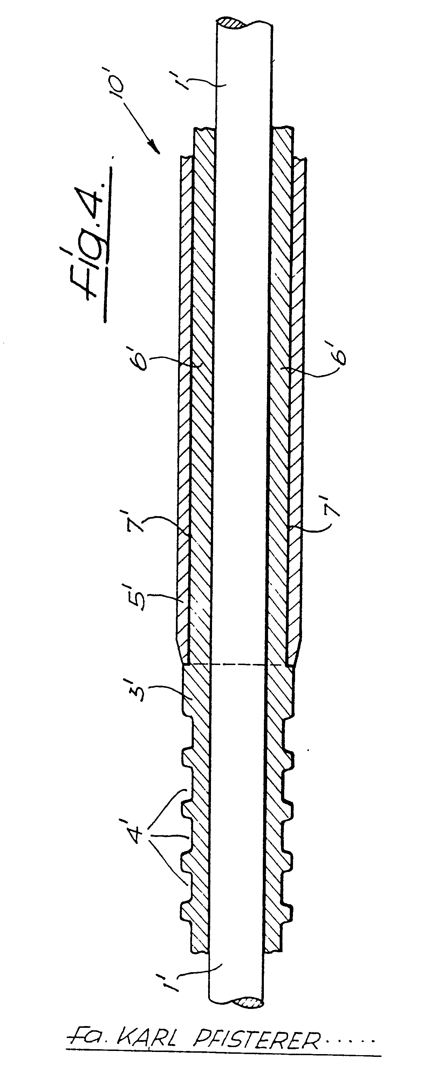

Wie die Fig. 5 und 6 zeigen, hat bei dem dritten Ausführungsbeispiel der metallische Mantel 105, welcher die Gleitbahn des Isolatorstabes 110 für die Stromabnehmer bildet, nur in seinen beiden Endabschnitten die Form eines Rohres. Der im Vergleich zu den beiden Endabschnitten wesentlich längere Mittelabschnitt hat ein U-ähnliches oder halbkreisförmiges Querschnittsprofil, wie insbesondere Fig. 6 zeigt. Daher liegt im Bereich des Mittelabschnitts des metallischen Mantels 105 die obere Hälfte der aus Silikonkautschuk bestehenden Umhüllung 106 des durch einen glasfaserverstärkten Kunststoffstab gebildeten Kerns 101 frei. Wärmedehnungen können deshalb nicht dazu führen, daß sich bei der anschließenden Abkühlung die Umhüllung 106 von der Mantelfläche des Kerns 101 abhebt. Durch die rohrförmigen Endabschnitte ist der metallische Mantel 105 bezüglich des Kerns 101 zentriert und festgelegt. Es wäre jedoch möglich, Bügel vorzusehen, welche in Längsrichtung des Isolatorstabes im Abstand voneinander die Umhüllung 106 von oben her übergreifen und mit dem Mittelabschnitt des metallischen Mantels 105 verbunden sind.

Bei dem in Fig. 7 dargestellten Ausführungsbeispiel hat der metallische Mantel 205 des Isolatorstabes 210 die Form eines oben in Längsrichtung geschlitzten Rohres. Der Längsschlitz 205' ermöglicht eine ausreichende Aufweitung des Rohres 205, um sicherzustellen, daß die aus Silikonkautschuk bestehende Umhüllung sich nach einer Erwärmung wieder so weit zusammenziehen kann, daß sie in Anlage an der Mantelfläche des Kernes 202 bleibt.

Bei dem in Fig. 8 dargestellten Ausführungsbeispiel eines erfindungsgemäßen Isolatorstabes wird der metallische Mantel durch ein Rohr 305 gebildet, das zwei sich in Rohrlängsrichtung erstreckende parallele Reihen von Durchbrüchen 205' im Bereich seiner oberen Hälfte aufweist. Die Durchbrüche 305' haben, wie Fig. 8 zeigt, die Form von Langlöchern und sind so angeordnet, daß die Durchbrüche der einen Reihe neben je einem Zwischenraum zwischen zwei aufeinanderfolgenden Durchbrüchen der anderen Reihe liegen und außerdem diese beiden Durchbrüche überlappen.

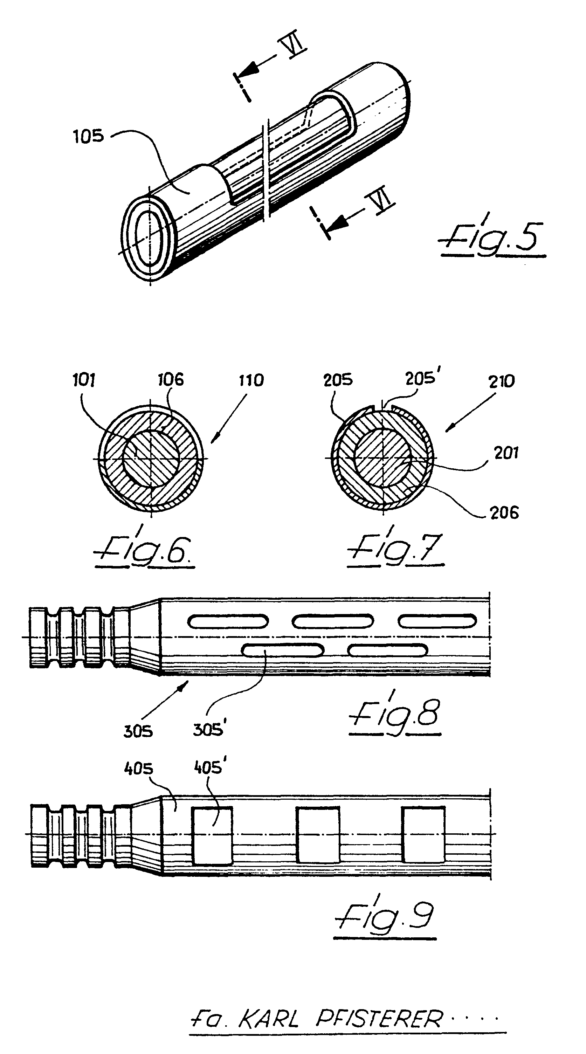

Wie Fig.9 zeigt, kann das den metallischen Mantel bildende Rohr 405 auch mit sich in Umfangsrichtung erstreckenden Fenstern 405' versehen sein, welche in der oberen Hälfte des Rohres vorgesehen sind und durch je einen Abschnitt voneinander getrennt sind, in dem das Rohr die nicht dargestellte, aus Silikonkautschuk bestehende Umhüllung vollständig umfaßt. Es folgen hier also im Wechsel aufeinander Bereiche, in denen die Umhüllung vollständig und unvollständig in Umfangsrichtung umfaßt wird. Auch hierdurch kann verhindert werden, daß sich die Umhüllung nach dem durch Gießen erfolgenden Aufbringen auf den glasfaserverstärkten Kunststoffstab während des durch die Abkühlung bedingten Schrumpfens vom Kunststoffstab abhebt.

- 11 -                                    0059845

<u>P a t e n t a n s p r ü c h e</u>

1. Isolatorstab für einen der mechanisch festen und elektrisch isolierenden Verbindung zwischen zwei Fahrdrahtabschnitten (9) einer Oberleitung dienenden Streckentrenner oder Phasentrenner, der auf einem Teil seiner Länge eine Gleitbahn für die den Fahrdraht kontaktierenden Stromabnehmer bildet und einen Kern (1;1';101;201) aus einem glasfaserverstärkten Kunststoff sowie eine den Kern zumindest auf einem Teil seiner Länge umgebende Hülle (3;3') aus einem elektrisch isolierenden Kunststoff aufweist, <u>dadurch gekennzeichnet,</u> daß in dem die Gleitbahn für die Stromabnehmer bildenden Abschnitt der Kern (1;1';101;201) zumindest auf seiner den Stromabnehmern zugekehrten Seite mit einem metallischen Mantel (5;5';105;205;305;405) versehen ist.

2. Isolatorstab nach Anspruch 1, dadurch gekennzeichnet, daß der metallische Mantel (5;5';105;205;305;405) aus Kupfer, einer Kupferlegierung oder aus einem nicht rostenden Stahl besteht.

3. Isolatorstab nach Anspruch 1 oder 2, dadurch gekennzeichnet, daß der Kern (1;1';101;201) in dem mit dem metallischen Mantel (5;5';105;205;305;405) versehenen Abschnitt eine Umhüllung (6;6';106;206) aus einem elektrisch isolierenden Kunststoff aufweist und der metallische Mantel an der Außenmantelfläche dieser Umhüllung anliegt.

4. Isolatorstab nach Anspruch 3, dadurch gekennzeichnet, daß die Umhüllung (6;6';106;206) aus einem dauerelastischen Harz oder aus Silikonkautschuk besteht.

5. Isolatorstab nach einem der Ansprüche 1 bis 4, dadurch gekennzeichnet, daß der metallische Mantel (105) ein Stab mit einem den Kern (101) teilweise umfassenden Querschnittsprofil ist.

0059845

6. Isolatorstab nach einem der Ansprüche 1 bis 4, dadurch gekennzeichnet, daß der metallische Mantel ein den Kern (1;1';201) umfassendes Rohr (5;5';205;305;405) ist.

7. Isolatorstab nach Anspruch 6, dadurch gekennzeichnet, daß das Rohr (205) in seiner oberen Hälfte in Längsrichtung zumindest auf einem Teil seiner Länge geschlitzt ist.

8. Isolatorstab nach Anspruch 7 oder 8, dadurch gekennzeichnet, daß das Rohr (305) in seiner oberen Hälfte wenigstens zwei in Rohrlängsrichtung verlaufende Reihen von Durchbrüchen (305') aufweist und die Durchbrüche der einen Reihe jeweils neben einem Zwischenraum zwischen zwei aufeinanderfolgenden Durchbrüchen der anderen Reihe angeordnet sind.

9. Isolatorstab nach Anspruch 6, dadurch gekennzeichnet, daß das Rohr (405) im Wechsel Abschnitte, in denen es den Kern vollständig umfaßt, und Abschnitte, in denen die Umfassung unvollständig ist, aufweist.

10. Isolatorstab nach einem der Ansprüche 1 bis 9, dadurch gekennzeichnet, daß der metallische Mantel (5;5';105; 205;305;405) mit beiden Enden die den Kern (1;1';101;201) umgebende Hülle (3;3') übergreift, welche aus Polytetrafluoräthylen oder Silikonkautschuk besteht.

11. Isolatorstab nach Anspruch 10, dadurch gekennzeichnet, daß die Umhüllung (6;6';106;206) in dem mit dem metallischen Mantel (5;5';105;205;305;405) versehenen Abschnitt sich einstückig an die Hülle (3;3') anschließt.

12. Isolatorstab nach Anspruch 11 , gekennnet durch eine Dichtpaste (7) zwischen den einander zugekehrten Flächen des metallischen Mantels (5) und der Hülle (3).

- . -

Fig.1.

Fig.2.

fa. KARL PFISTERER · · · ·

0059845

Fig. 3a

Fig. 3b.

fa. KARL PFISTERER ····

Fig.4.

Fa. KARL PFISTERER·····

Fig.5

105

Fig.6.

101  106  110

Fig.7

205  205'  210  201  206

Fig.8

305  305'

Fig.9

405  405'

Fa. KARL PFISTERER · · · ·